# EUROPEAN PATENT SPECIFICATION

(11) **EP 1 418 718 B1**
(45) Date of publication and mention of the grant of the patent: **27.12.2006**
(21) Application number: 03257001.2
(22) Date of filing: 05.11.2003
(51) Int. Cl.: H04L 12/56

(54) **Network architecture for mobile communication system and communication method using the same**
Netzarchitektur für mobile Kommunikationssysteme und entsprechendes Kommunikationsverfahren
Architecture réseau pour systèmes mobiles ainsi que procédé utilisant celle-ci

(30) Priority: 06.11.2002 KR 2002068572
(43) Date of publication of application: 12.05.2004
(73) Proprietor: SAMSUNG ELECTRONICS CO., LTD., Suwon-City, Kyungki-do (KR)
(72) Inventor: Kim, Young-soo, Gangnam-gu Seoul (KR); Cho, Sung-hyun, Songpa-gu Seoul (KR); Hwang, Chan-soo, Kiheung-eub Yongin-city (KR); Park, Won-hyoung, Gwanak-gu Seoul (KR)
(74) Representative: Greene, Simon Kenneth

(56) References cited:
- EP-A- 0 939 522
- WO-A-00/51309
- WO-A-01/41349
- WO-A-02/37873
- US-A1- 2002 006 133

## Description

The present invention relates to a next-generation mobile communication system, and more particularly, to a network architecture for a next-generation mobile communication system capable of accommodating an Internet Protocol (IP) and a communication method using the same.

A network architecture is a very important element of a mobile communication system that can affect the general performance of the mobile communication system. Depending on the network architecture, each element thereof may have different functions. In the past, circuit switches generally accounted for most developments in mobile terminal systems together with conventional wired telephone systems. However, recently, efforts have been increasingly made to meet the demand of data communications. As part of the efforts, a method of converting packet data into an appropriate type of data for a conventional circuit switch and then transmitting the converted packet data has been proposed. However, due to several problems that the above conversion method has, such as low data transmission speed, a new network architecture over which successful transmission of packet data can be guaranteed has been developed.

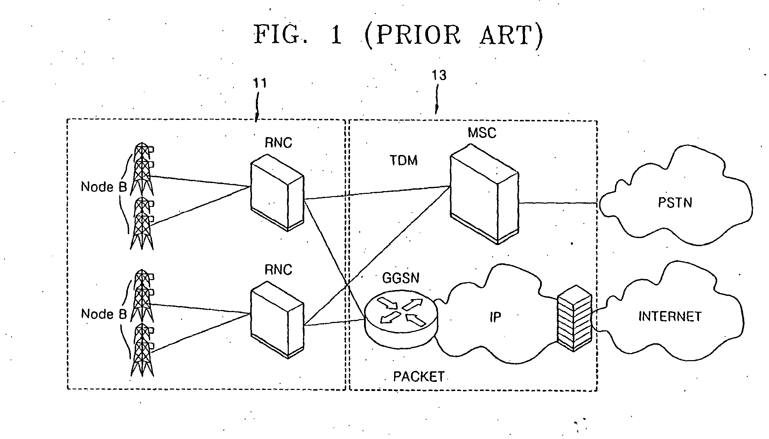

The Third Generation Partnership Project (3GPP) has proposed a new network architecture that can process both circuit data and packet data in a mobile communication system. As shown in FIG. 1, the proposed network architecture is comprised of a radio access network (RAN) 11 and a core network (CN) 13. Each of the networks 11 and 13 is comprised of such elements that can provide mobile communication services. The RAN 11 deals with mobile terminals' wireless access and mobility, and the CN 13 deals with mobile terminals' attempts to access public switched telephone network (PSTN) or the Internet. The RAN 11 is comprised of a radio network controller (RNC) which carries out handover control, admission control, etc. and nodes B, that is, base stations which communicate with mobile terminals in a wireless manner. In the CN 13, voice communications are connected to the PSTN via a mobile service switching center (MSC), and packet data communications are connected to the Internet via a serving general-packet-radio-service (GPRS) support node (SGSN) or gateway GPRS support node (GGSN). In other words, in the conventional network architecture, the RAN 11 is connected to the mobile terminals via the base stations and the CN 13 is connected to the Internet network or the PSTN.

In the conventional network architecture, user services can be guaranteed in a private network. However, it is expensive to install and manage an access network of a system. In addition, traffic is concentrated on each gateway connecting networks, and it is necessary to redefine a protocol of a control plane for a private access network. Moreover, the conventional network architecture is not appropriate for packet services and needs an additional conversion process in each gateway to be compatible with a packet network, such as the Internet.

Unlike the conventional network architecture comprised of a plurality of networks, i.e., the RAN 11, the CN 13, and a public network, such as the public telephone network and the Internet, network architectures for next-generation mobile communication systems become simpler. In addition, the network architectures for next-generation mobile communication systems increasingly adopt an All-Internet protocol (All-IP) concept, which is based on an Internet protocol (IP) packet network, in order to integrate their sub-networks into a single network. However, the conventional network structure can hardly be applied to such All-IP-based mobile communication systems because of the above-mentioned problems.

WO 00/51309 describes a virtual home agent service wherein multiple home agents are provided, each used for a dedicated VPN service.

According to the invention, there is provided a system as set out in claim 1 and a method as set out in claim 3.

The present invention provides a network architecture in a next-generation mobile communication system, the network architecture being fairly compatible with other systems using a commonly-used Internet protocol (IP).

The present invention also provides a communication method in the network architecture. In the communication method, control information packet data and user packet data are separately processed.

The above and other features and advantages of the present invention will become more apparent by describing in detail exemplary embodiments thereof with reference to the attached drawings in which:
FIG. 1 is diagram illustrating a typical third generation partnership project (3GPP) network architecture;
FIG. 2 is a diagram illustrating a network architecture for a next-generation mobile communication system according to a preferred embodiment of the present invention;
FIG. 3 is a flowchart of a communication method of transmitting control information packet data and user packet data in the network architecture of FIG. 2;
FIG. 4 is a diagram illustrating a path of transmitting control information data in FIG. 3; and
FIG. 5 is a diagram illustrating a path of transmitting user data in FIG. 3.

Hereinafter, the present invention will be described in greater detail with reference to the accompanying drawings in which preferred embodiments of the invention are shown.

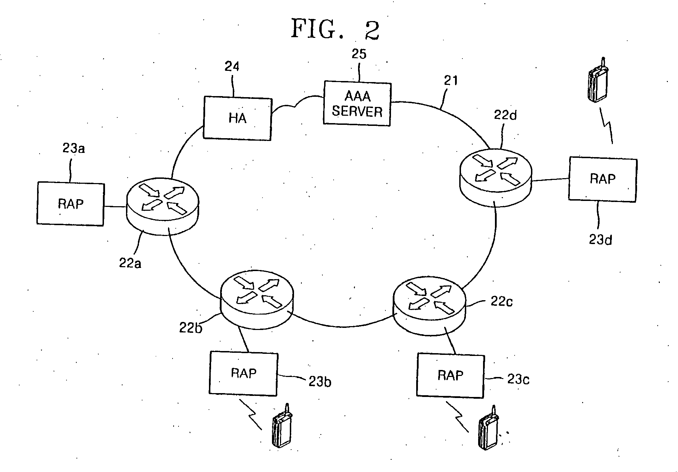

FIG. 2 is a diagram illustrating a network architecture for a next-generation communication system according to a preferred embodiment of the present invention. Referring to FIG. 2, a public Internet network 21 includes a plurality of IP routers 22a through 22d, a home agent 24, and an authorization authentication accounting (AAA) server 25. A plurality of nodes, that is, radio access points 23a through 23d are connected to the IP routers 22a through 22d, respectively.

Before we move on to the explanation of each element of the network architecture of FIG. 2, let us assume that data is transmitted over the public Internet network 21 according to such Internet protocol as Internet Protocol version 6 (IPv6) specified by the Internet Engineering Task Force (IETF)'s Request for Comments (RFC) 2460.

The IP routers 22a through 22d serve as gateways for transmitting data between a sending node and a destination node by using typical Internet addresses and routing protocols.

The nodes, that is, RAPs 23a through 23d can be accessed by mobile terminals in a wireless manner. In addition, the RAPs 23a through 23d are connected to the IP routers 22a through 22d in a wired manner, connect mobile terminals with the public Internet network 21 and perform router functions as well as general radio link functions. The RAPs 23a through 23d sets a signalling path to the RAPs 23a through 23d, the home agent 24 and the AAA server 25 through a typical virtual private network (VPN) service. Accordingly, in a case that any of the mobile terminals requests mobile communication service, each of RAPs 23a through 23d in the vicinity of which the mobile terminal is located can communicate with adjacent RAPs 23a through 23d, the home agent 24 and the AAA server 25 along a VPN signalling path while guaranteeing security.

Each of the RAPs 23a through 23d serves as a radio network controller (RNC), a gateway general-packet-radio-service (GPRS) support node (GGSN), and a mobile service switching center (MSC) in the network architecture of FIG. 1, which is proposed by the third-generation partnership project (3GPP). Accordingly, the RAPs 23a through 23d may use session initiation protocol (SIP) for call setting, telephony routing over IP (TRIP) for telephone services, E.164 telephone numbers, and protocols defined by the IETF's Telephone Number Mapping (ENUM) working group for corresponding to Domain Name System (DNS). In the meantime, the RAPs 23a through 23d are required to reserve resources on a network for guaranteeing different qualities of service depending on the types of communications, such as voice communications, video phone services, or data communications. The reservation of resources is carried out by using either resource reservation protocol (RSVP) or Differentiated Services (DiffServ) or by using both. Here, RSVP is a protocol that enables resources to be reserved along a predetermined path, and DiffServ is an architecture that transmits data according to their priority. If a mobile terminal moves from the vicinity of an RAP to the vicinity of another RAP, a micromobility protocol operates and quickly carries out a handover and also resource reservation changes only in areas which have undergone a change in the setup of the path. Thereafter, a binding update message, generated by the RAP (23a through 23d) in the vicinity of which the mobile terminal is located, is transmitted to the home agent 24 via a corresponding IP router (22a through 22d).

The home agent 24 controls all the RAPs 23a through 23d in the public Internet network 21, which is a wired network, and performs a variety of functions, such as initial registration of mobile terminals, IP routing and root optimization, management of the address and migration information of the mobile terminal, tunnelling, and inverse tunnelling. Preferably, the home agent 24 is constructed to support virtual private network services of the mobile terminal. In order to manage and support migration of the mobile terminal, in particular, the home agent 24 receives location information of the mobile terminal contained in the binding update message delivered from the RAPs 23a through 23d when the mobile terminal leaves its home network and then attempts to access a network outside the home network. Thereafter, the home agent 24 stores the received location information of the mobile terminal in a database. The home agent 24 stores a home IP address of each of the RAPs 23a through 23d as location information of the mobile terminal in the form of a table and, if necessary, transmits data received from the mobile terminal to the RAP 23a through 23d through tunnelling and encapsulation. In other words, if a mobile terminal sends data to its home network with only knowledge of a home IP address of the destination mobile terminal, the home agent 24 analyzes the data, extracts location information of the destination mobile terminal from the database based on a result of the analysis, and transmits the data to a network where the destination mobile terminal belongs using the RAPs 23a through 23d. The home agent 24 may use IETF's mobility IP protocol as a macromobility protocol and Cellular IP or HAWAII as a micromobility protocol. In addition, the home agent 24 may use a content transfer protocol for transmitting current connection information and a handoff candidate discovery protocol for a handover.

The AAA server 25 serves as a subscriber server from a mobile IP's point of view and performs authorization of subscribers who attempt to access the public Internet network 21 for mobile terminals, authentication of the subscribers' rights to use the public Internet network 21, and charging the subscribers for access to the public Internet network 21. The AAA server 25 stores AAA information of each mobile terminal. For these functions, the AAA server 25 may use a protocol, such as Remote Authentication Dial in User Service (RADIUS), Diameter, or Common Open Policy Service (COPS). Like the home agent 24, the AAA server 25 is preferably constructed to support VPN services of mobile terminals. Here, the RADIUS protocol is taught by C. Rigney, S. Willens, A. Rubens, and W. Simpson in "Remote Authentication Dial in User Service", RFC 2865, June 2000, the Diameter protocol taught by P. R. Calhoun, J. Arkko, E. Guttman, G. Zorn, and J. Loughney in "Diameter Base Protocol, Internet Draft, Draft-ietf-aaa-diameter-11.txt, June 2002, and the COPS protocol taught by D. Durham, J. Boyle, R. Cohen, S. Herzog, R. Rajan, and A. Sastry in "The COPS Protocol", RFC 2748, January 2000.

In other words, while in a conventional mobile communication system, equipments for managing mobile terminals' mobility and performing AAA constitute their own private network in a hierarchical manner, a network architecture according to a preferred embodiment of the present invention does not constitute a private network which is expensive. Rather, the network architecture according to a preferred embodiment of the present invention supports VPN by using a public Internet network.

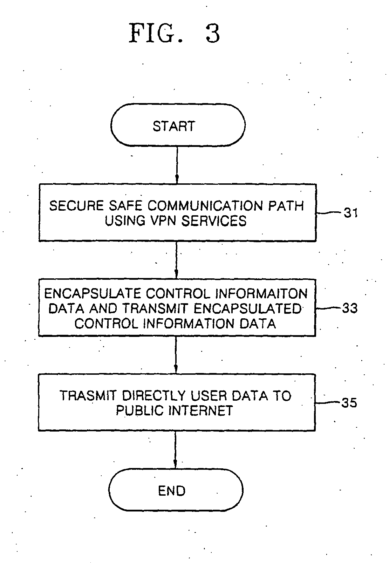

FIG. 3 is a flowchart of a data communication method in the network architecture of FIG. 2. Communication content transmitted among the RAPs 23a through 23d or control information of a predetermined mobile terminal is encapsulated in the RAPs 23a through 23d, the home agent 24 or the AAA server 25 in such a manner that its security can be guaranteed. Thereafter, the encapsulated communication content or control information is transmitted between the RAPs 23a through 23d, between the RAPs 23a through 23d and the home agent 24, and between the RAPs 23a through 23d and the AAA server 25.

More specifically, in step 31, an RAP (23a through 23d) communicates with other RAPs (23a through 23d), the home agent 24, and the AAA server 25, thus securing a safe communication path through a predetermined security process. The communication path is used for transmitting control information data. For secured communications, a VPN may be used. In addition, RSVP may be used to prioritize the control information data.

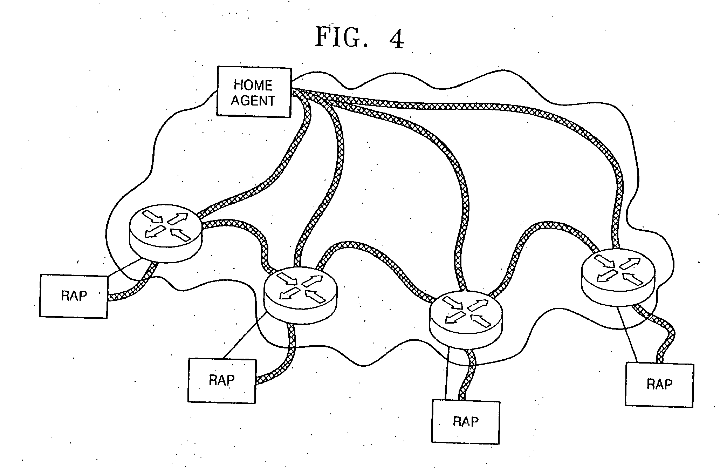

In step 33, the control information data necessary for mobile communication in the network structure of FIG. 2 is transmitted. Before being transmitted, as shown in FIG. 4, the control information data is encapsulated in a method appointed by the VPN and may set a higher priority than that of the user data to the encapsulated control information data using a protocol, such as RSVP. Then, a receiving party such as other RAPs (23a through 23d), the home agent 24, and the AAA server 25 is supposed to interpret the encapsulated control information data.

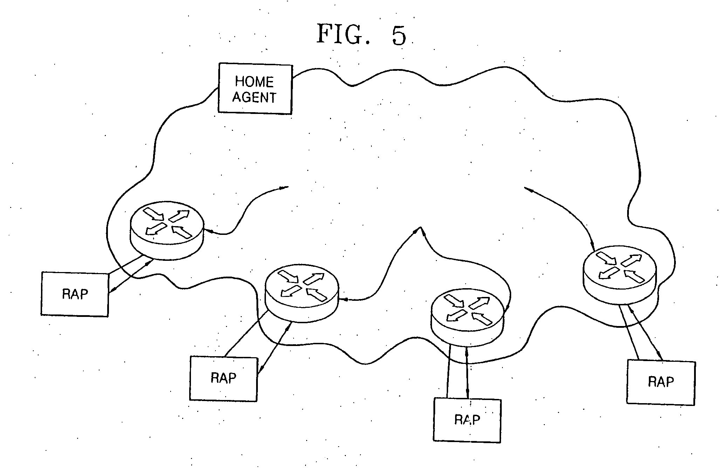

In step 35, user data of a mobile terminal is directly transmitted to the public Internet network 21 via the RAPs 23a through 23d without encapsulation and tunnelling, as shown in FIG. 5.

In other words, in a communication method according to a preferred embodiment of the present invention, the control information data and the user data are separately processed and then are separately transmitted in a different manner.

As described above, according to the present invention, a complicated network architecture is not necessary to transmit control information. The network architecture according to the present invention is compatible with other systems and is highly expandable in terms of system installation. In addition, a system's protocol stack can be simplified, and the installation costs can be considerably reduced.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A network architecture for a mobile communication system, the network architecture comprising:
a plurality of Internet protocol (IP) routers arranged (22) to serve as gateways for transmitting data from one mobile terminal, which is a sending party, to another mobile terminal, which is a receiving party, over a public Internet network operated by a commonly-used Internet protocol;
a home agent (24) which is located at a predetermined place on the public Internet network, the home agent being arranged to carry out initial registration of mobile terminals, IP routing, root optimization, and management of mobility of the mobile terminals;
an authorization authentication accounting (AAA) server (25) which is located at another predetermined place on the public Internet network, the AAA server being arranged to carry out authorization, authentication and accounting for the mobile terminals such that the mobile terminals access to the public Internet network and storing AAA information of each of the mobile terminals; and
a plurality of radio access points (RAPs) (23) which are respectively connected to the public Internet network via the IP routers, the RAPs arranged to connect the mobile terminals and to perform general radio link functions;
**characterised in that** the home agent (24), the AAA server (25), and the plurality of RAPs (23) are all constructed to support virtual private network (VPN) services and **in that** the network architecture is adapted:
(a1) to secure a safe communication path by performing communication between the plurality of RAPs (23), between the RAPs (23) and the home agent (24), and between the RAPs (23) and the AAA server (25) at a stage of system initialization through VPN services; and
(a2) to exchange control information data between the plurality of RAPs, between the RAPs (23) and the home agent (24), and between the RAPs (23) and the AAA server (25) by encapsulating the control information data in a predetermined manner, and transmitting the encapsulated control information data.

2. The network architecture of claim 1, wherein the mobile terminals are adapter to transmit the user data of each mobile terminal directly to the public Internet network without encapsulation and tunnelling.

3. A communication method in a network architecture for a mobile communication system, the network architecture comprising a plurality of Internet protocol (IP) routers (22), a home agent (24), an authorization authentication accounting (AAA) server (25) and a plurality of radio access points (RAPs) (23), the communication method comprising:
(a) transmitting control information data using a first communication method; and
(b) transmitting user data using a second communication method;
**characterised in that** step (a) comprises:
(a1) securing a safe communication path by performing communication between the plurality of RAPs (23), between the RAPs (22) and the home agent (24), and between the RAPs (23) and the AAA server (25) at a stage of system initialization through VPN services; and
(a2) encapsulating the control information data in a predetermined manner, and transmitting the encapsulated control information data;
whereby the control information data and user data are separately processed and transmitted.

4. The communication method of claim 3, wherein in step (a2), a higher priority than that of the user data is set to the encapsulated control information data.

5. The communication method of claim 3, or 4, wherein in step (b), the user data of each mobile terminal is directly transmitted to the public Internet network without encapsulation and tunneling:

6. Use of a communication method according to any of claims 3 to 5 in a network architecture according to claim 1 or 2.

## Patentansprüche

1. Netzwerkarchitektur für ein Mobilkommunikationssystem, wobei die Netzwerkarchitektur umfasst:
eine Mehrzahl von Internetprotokollroutern (22), so angeordnet, dass sie als Gateways dienen zum Übertragen von Daten von einem mobilen Endgerät, das ein Sendepartner ist, zu einem anderen mobilen Endgerät, das ein Empfängerpartner ist, über ein öffentliches Internetnetzwerk, das von einem allgemein verwendeten Internetprotokoll (IP) betrieben wird;
ein Homeagent (24), der an einer bestimmten Stelle auf dem öffentlichen Internetnetzwerk gelegen ist, wobei der Homeagent so angeordnet ist, dass er Initialregistrierung von mobilen Endgeräten ausführt, IP-Routing, Rootoptimierung und Verwaltung der Mobilität der mobilen Endgeräte;
einen Server (25) für Autorisierung, Authentifikation und Abrechnung (AAA, authorization authentication accounting), der an einer anderen bestimmten Stelle im öffentlichen Internetnetzwerk gelegen ist, wobei der AAA-Server so angeordnet ist, dass er Autorisierung, Authentifikation und Abrechnung für die mobilen Endgeräte derart ausführt, dass die mobilen Endgeräte auf das öffentliche Internetnetzwerk zugreifen und AAA-Information von jedem der mobilen Endgeräte speichert; und
eine Mehrzahl von Funkzugriffspunkten (RAPs, radio access points) (23), die jeweils über die IP-Router mit dem öffentlichen Internetnetzwerk verbunden sind, wobei die RAPs angeordnet sind zum Verbinden der mobilen Endgeräte und zum Durchführen der allgemeinen Funkverbindungsfunktionen;
**dadurch gekennzeichnet, dass** der Homeagent (24), der AAA-Server (25) und die Mehrzahl von RAPs (23) alle so konstruiert sind, dass sie virtuelle private Netzwerkdienste (VPN) unterstützen und **dadurch**, dass die Netzwerkarchitektur geeignet ist:
(a1) einen sicheren Kommunikationsweg durch Durchführen von Kommunikation zwischen der Mehrzahl von RAPs (23) zwischen den RAPs (23) und dem Homeagent (24), und zwischen den RAPs (23) und dem AAA-Server (25) in einer Stufe der Systeminitialisierung durch VPN-Dienste zu sichern; und
(a2) Kontrollinformationsdaten zwischen der Mehrzahl von RAPs, zwischen den RAPs (23) und dem Homeagent (24) und zwischen den RAPs (23) und dem AAA-Server (25) durch Verkapseln der Kontrollinformationsdaten in einer bestimmten Weise und Übertragen der verkapselten Kontrollinformationsdaten auszutauschen.

2. Netzwerkarchitektur nach Anspruch 1, worin die mobilen Endgeräte geeignet sind, die Benutzerdaten jedes mobilen Endgeräts direkt zum öffentlichen Internetnetzwerk, ohne Verkapselung und Tunnelung, zu übertragen.

3. Kommunikationsverfahren in einer Netzwerkarchitektur für ein Mobilkommunikationssystem, wobei die Netzwerkarchitektur eine Mehrzahl von Internetprotokollroutern (22), einen Homeagent (24), einen Server (25) für Autorisierung, Authentifikation und Abrechnung (AAA-Server) und eine Mehrzahl von Funkzugriffspunkten (RAPs) (23) umfasst, wobei das Kommunikationsverfahren umfasst:
(a) Übertragen von Kontrollinformationsdaten unter Verwendung eines ersten Kommunikationsverfahrens;
und
(b) Übertragen von Benutzerdaten unter Verwendung eines zweiten Kommunikationsverfahrens;
**dadurch gekennzeichnet, dass** Schritt (a) umfasst:
(a1) Sichern eines sicheren Kommunikationsweges durch Durchführen von Kommunikation zwischen der Mehrzahl von RAPs (23), zwischen den RAPs (23) und dem Homeagent (24) und zwischen den RAPs (23) und dem AAA-Server (25) in einer Stufe der Systeminitialisierung durch VPN-Dienste; und
(a2) Verkapseln der Kontrollinformationsdaten in einer bestimmten Weise und Übertragen der verkapselten Kontrollinformationsdaten;
wodurch die Kontrollinformationsdaten und Benutzerdaten getrennt verarbeitet und übertragen werden.

4. Kommunikationsverfahren nach Anspruch 3, worin in Schritt (a2) eine höhere Priorität als die der Benutzerdaten für die verkapselten Kontrollinformationsdaten festgesetzt wird.

5. Kommunikationsverfahren nach Anspruch 3 oder 4, worin in Schritt (b) die Benutzerdaten für jedes mobile Endgerät direkt zum öffentlichen Internetnetzwerk, ohne Verkapselung und Tunnelung, übertragen werden.

6. Verwendung des Kommunikationsverfahrens nach einem der Ansprüche 3 bis 5 in einer Netzwerkarchitektur nach Anspruch 1 oder 2.

## Revendications

1. Architecture de réseau pour un système de communication mobile, l'architecture de réseau comprenant :
une pluralité de routeurs IP (Internet Protocol) (22) agencés pour servir en tant que passerelles pour transmettre des données d'un terminal mobile, qui est une partie d'envoi, à un autre terminal mobile, qui est une partie de réception, sur un réseau Internet public mis en oeuvre par un protocole Internet généralement utilisé ;
un agent nominal (24) qui est situé à un endroit prédéterminé sur le réseau Internet public, l'agent nominal étant agencé pour effectuer un enregistrement initial de terminaux mobiles, un routage IP, une optimisation de racine et une gestion de mobilité des terminaux mobiles ;
un serveur AAA (autorisation, authentification, comptabilité) (25) qui est situé à un autre endroit prédéterminé sur le réseau Internet public, le serveur AAA étant agencé pour effectuer une autorisation, une authentification et une comptabilité pour les terminaux mobiles de sorte que les terminaux mobiles accèdent au réseau Internet public et mémorisant des informations AAA de chacun des terminaux mobiles ; et
une pluralité de points d'accès radio (RAP) (23) qui sont respectivement connectés au réseau Internet public via les routeurs IP, les RAP étant agencés pour connecter les terminaux mobiles et pour effectuer des fonctions de liaison radio générales ;
**caractérisée en ce que** l'agent nominal (24), le serveur AAA (25) et la pluralité de RAP (23) sont tous construits pour prendre en charge des services de réseau privé virtuel (VPN) et **en ce que** l'architecture de réseau est adaptée :
(a1) pour garantir un trajet de communication sûr en établissant une communication entre la pluralité de RAP (23), entre les RAP (23) et l'agent nominal (24 et entre les RAP (23) et le serveur AAA (25) à une étape d'initialisation de système par l'intermédiaire de services VPN ; et
(a2) pour échanger des données d'informations de commande entre la pluralité de RAP, entre les RAP (23) et l'agent nominal (24) et entre les RAP (23) et le serveur AAA (25) en encapsulant les données d'informations de commande d'une manière prédéterminée et en transmettant les données d'informations de commande encapsulées.

2. Architecture de réseau selon la revendication 1, dans laquelle les terminaux mobiles sont adaptés pour transmettre les données d'utilisateur de chaque terminal mobile directement au réseau Internet public sans encapsulation ni tunnellisation.

3. Procédé de communication dans une architecture de réseau pour un système de communication mobile, l'architecture de réseau comprenant une pluralité de routeurs IP (Internet Protocol) (22), un agent nominal (24), un serveur (AAA) (autorisation, authentification, comptabilité) (25) et une pluralité de points d'accès radio (RAP) (23), le procédé de communication comprenant les étapes consistant à :
(a) transmettre des données d'informations de commande en utilisant un premier procédé de communication; et
(b) transmettre des données d'utilisateur en utilisant un deuxième procédé de communication ;
**caractérisé en ce que** l'étape (a) comprend les étapes consistant à :
(a1) garantir un trajet de communication sûr en établissant une communication entre la pluralité de RAP (23), entre les RAP (23) et l'agent nominal (24) et entre les RAP (23) et le serveur AAA (25) à une étape d'initialisation de système par l'intermédiaire de services VPN ; et
(a2) encapsuler les données d'informations de commande d'une manière prédéterminée, et transmettre les données d'informations de commande encapsulées ;
moyennant quoi les données d'informations de commande et les données d'utilisateur sont traitées et transmises séparément.

4. Procédé de communication selon la revendication 3, dans lequel, à l'étape (a2), une priorité plus élevée que celle des données d'utilisateur est donnée aux données d'informations de commande encapsulées.

5. Procédé de communication selon la revendication 3 ou 4, dans lequel, à l'étape (b), les données d'utilisateur de chaque terminal mobile sont directement transmises au réseau Internet public sans encapsulation ni tunnellisation.

6. Utilisation d'un procédé de communication selon l'une quelconque des revendications 3 à 5 dans une architecture de réseau selon la revendication 1 ou 2.
